# EUROPEAN PATENT APPLICATION

(11) **EP 4 492 640 A1**
(43) Date of publication of application: **15.01.2025**
(21) Application number: 23766736.5
(22) Date of filing: 03.03.2023
(51) Int. Cl.: H02K 1/2783

(54) **ROTOR AND IPM MOTOR USING SAME**

(30) Priority: 11.03.2022 JP 2022037651
(71) Applicant: Valeo Japan Co., Ltd, Kumagaya-shi, Saitama 360-0193 (JP)
(72) Inventor: MIYAMAE, Shinsuke, Kumagaya-shi Saitama 360-0193 (JP); KHANCHOUL, Mohamed, 78320 Le Mesnil Saint Denis (FR); HADAS, Rostislav, 10800 Strasnice (CZ)
(74) Representative: Valeo Systèmes Thermiques
(86) International application number: PCT/JP2023/008012
(87) International publication number: WO 2023/171560

(57) **Abstract**

[Summary]

[Problem] In an embedded magnet rotor in which permanent magnets are arranged in a Halbach array, to facilitate the manufacturing of a magnet holding part and to mitigate the generation of useless magnetic flux that does not contribute to a rotational force.

[Solution] This rotor 3 is provided with a plurality of main magnet holding parts 17 disposed in the circumferential direction of a rotor core 8 and a plurality of auxiliary magnet holding parts 18 disposed so as to face the spaces between each of the adjacent main magnet holding parts, in which main magnets 11 of which the magnetic pole directions align with the radial direction of the rotor core are fit into the main magnet holding parts and auxiliary magnets 12 of which the magnetic pole directions align with the circumferential direction of the rotor core are fit into the auxiliary magnet holding parts, wherein, if the rotor core 8 is divided into a rotor core inner peripheral part 8a which is to the radially inward side of the main magnet holding parts and a rotor core outer peripheral part 8b which is to the radially outward side of the main magnet holding parts, magnetic path cutoff parts 20 and pairs of bridge parts 21, which are adjacent to the magnetic path cutoff parts and which connect the rotor core inner peripheral part 8a and the rotor core outer peripheral part 8b, are provided between adjacent main magnet holding parts 17 and to the radially inward side of the auxiliary magnet holding parts 18.

## Description

### [Technical Field]

The present invention relates to a rotor of the embedded permanent magnet type, and to an IPM motor employing same, and the present invention particularly relates to a rotor adapted to reduce the generation of wasted magnetic flux that does not contribute to rotational force, and to an IPM motor employing same.

### [Background Art]

In electric motors having an inner-rotor structure, techniques are known that comprise a plurality of main magnets magnetized in a rotor radial direction and a plurality of auxiliary magnets magnetized in a direction other than the radial direction (e.g., a circumferential direction), wherein the main magnets are arranged at intervals in the circumferential direction on an outer circumferential surface of a rotor core, the auxiliary magnets are arranged between the main magnets, and the main magnets and auxiliary magnets form a Halbach array, in order to generate an intense magnetic field on an outer side of the magnet array and also to reduce cogging torque and torque ripple (see Patent Documents 1 and 2).

Adopting such a magnet array makes it possible to form a high-torque, high-efficiency electric motor, but when an SPM (Surface Permanent Magnet) structure is adopted, where a plurality of main magnets and a plurality of auxiliary magnets are arranged on the outer circumferential surface of the rotor core, a step for bonding the main magnets and the auxiliary magnets to the outer circumferential surface of the rotor core using an adhesive or the like is then needed, and there is also the risk of problems with the magnets cracking or detaching and being scattered, which would reduce the magnetic characteristics.

IPM (interior Permanent Magnet) structures, which have the magnets embedded within the rotor core with a Halbach magnet array applied, are therefore being investigated, and the applicant of this case has previously proposed the rotor disclosed in Patent Document 3.

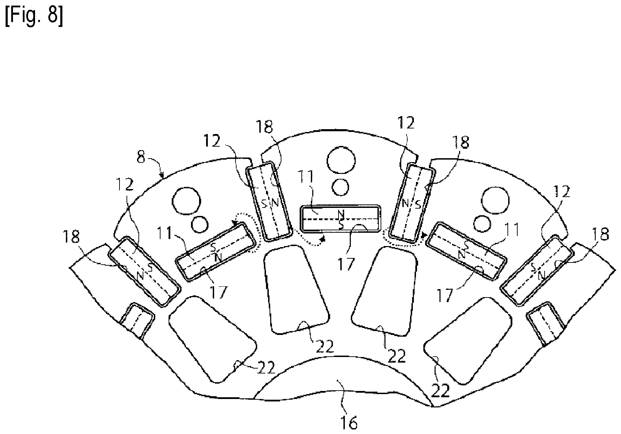

As shown in fig. 8, the proposed rotor is provided with a plurality of main magnet holding portions 17 arranged along a circumferential direction of the rotor core 8, and a plurality of auxiliary magnet holding portions 18 arranged along a radial direction of the rotor core between each of the adjacent main magnet holding portions 17, main magnets 11 having a magnetic pole direction aligned with the radial direction of the rotor core 8 are fitted into the main magnet holding portions 17, and auxiliary magnets 12 having a magnetic pole direction aligned with the circumferential direction of the rotor core 8 are fitted into the auxiliary magnet holding portions 18, and cavities 22 extending parallel to a shaft hole 16 formed in the center of the rotor core 8 are formed between the auxiliary magnet holding portions 18 and said shaft hole 16, thereby reducing magnetic flux leaking radially inward from the magnet array and improving the magnetic characteristics.

### [Prior Art Documents]

### [Patent Documents]

[Patent Document 1] JP 2002-354721 A
[Patent Document 2] JP 2007-014110 A
[Patent Document 3] JP 2020-72634 A

### [Summary of the Invention]

### [Problems to be Solved by the Invention]

However, there are problems with adopting the IPM structure in that, when the plurality of main magnet holding portions 17 are arranged along the circumferential direction of the rotor core 8, and the plurality of auxiliary magnet holding portions 18 are formed between each of the adjacent main magnet holding portions 17, the main magnet holding portions 17 and the auxiliary magnet holding portions 18 are disposed alternately and adjacently in the circumferential direction on the same imaginary circle centered on the shaft hole 16, which narrows the circumferential width between the magnet holding portions and makes production more difficult.

Furthermore, the small width between the magnet holding portions causes problems in that it is impossible to form magnetic path blocking portions between the magnet holding portions, and, as shown by the broken lines in fig. 8, flows of wasted magnetic flux that do not contribute to the rotational force are generated between the adjacent main magnets 11 and auxiliary magnets 12, and magnetic flux loops are also readily formed by the main magnets 11 themselves and by the auxiliary magnets 12 themselves.

The present invention was devised in light of this situation, and the main problem addressed by the present invention lies in providing a rotor which enables simple production of magnet holding portions and furthermore enables a reduction in the generation of wasted magnetic flux that does not contribute to the rotational force, and also in providing an IPM motor employing this rotor.

### [Means for Solving the Problems]

In order to address the problem above, a rotor according to the present invention constitutes:
a rotor used in a motor having an inner-rotor structure, the rotor comprising a cylindrical rotor core and a plurality of permanent magnets arranged inside the rotor core, and being characterized in that:
a shaft hole is formed in the center of the rotor core so as to penetrate the rotor core;
a plurality of main magnet holding portions extending parallel to the shaft hole and arranged so that a long side in a rectangular cross section thereof aligns with a circumferential direction of the rotor core, and
a plurality of auxiliary magnet holding portions extending parallel to the shaft hole and disposed so as to face a space between each of the adjacent main magnet holding portions, the auxiliary magnet holding portions being arranged further outward in a radial direction of the rotor core than the main magnet holding portions, and being arranged so that a long side in a rectangular cross section thereof aligns with the radial direction of the rotor core
are formed in a region close to an outer circumferential surface of the rotor core;
the rotor core comprises:
   a rotor core inner circumferential portion radially inward from the main magnet holding portions, and
   a rotor core outer circumferential portion radially outward from the main magnet holding portions; and
   magnetic path blocking portions for obstructing the formation of a magnetic path, and bridge portions provided adjacent to the magnetic path blocking portions, forming pairs between the adjacent main magnet holding portions, and connecting the rotor core inner circumferential portion and the rotor core outer circumferential portion
   are provided between the adjacent main magnet holding portions radially inward from the auxiliary magnet holding portions.

Accordingly, the auxiliary magnet holding portions are disposed so as to face the space between each of the plurality of main magnet holding portions which are arranged alongside each other so as to align with the circumferential direction of the rotor core. Consequently, the main magnet holding portions and the auxiliary magnet holding portions are not arranged on the same imaginary circle centered on an axial center of the rotor core and are therefore no longer circumferentially adjacent, making it possible to avoid the problem of a smaller circumferential width between the magnet holding portions, which makes production more difficult.

Furthermore, the magnetic path blocking portions are provided between the adjacent main magnet holding parts radially inward from the auxiliary magnet holding portions, while bridge portions adjacent to the magnetic path blocking portions and connecting the rotor core inner circumferential portion and the rotor core outer circumferential portion are also provided in pairs between the adjacent main magnet holding portions. The bridge portions make it possible to suppress the formation of magnetic paths at parts between the adjacent main magnet holding portions radially inward from the auxiliary magnet holding portions, while also consolidating the rotor core inner circumferential portion and the rotor core outer circumferential portion. Consequently, the bridge portions make it possible to reduce flows of magnetic flux between the main magnets and the auxiliary magnets, and magnetic flux loops formed by the main magnets themselves and by the auxiliary magnets themselves. Accordingly, a rotor comprising bridge portions such as these is capable of increasing output and achieving better output efficiency of a motor by suppressing the generation of wasted magnetic flux that does not contribute to rotational force.

Here, the permanent magnets may include:
main magnets fitted into the main magnet holding portions so that a magnetic pole direction thereof aligns with the radial direction of the rotor core, and auxiliary magnets fitted into the auxiliary magnet holding portions so that a magnetic pole direction thereof aligns with the circumferential direction of the rotor core, and
a circumferential holding portion for holding the main magnets in the circumferential direction may be provided on the bridge portions, close to a point of connection to the rotor core inner circumferential portion, while a radial holding portion for holding the auxiliary magnets in the radial direction may also be provided on the bridge portions, close to a point of connection to the rotor core outer circumferential portion.

By adopting such a configuration, it is possible to arrange the magnets at fixed positions and to ensure predetermined performance of the motor. Accordingly, the bridge portions combine a function of restricting magnetic paths between the adjacent main magnet holding portions radially inward from the auxiliary magnet holding portions, a function of consolidating the rotor core inner circumferential portion and the rotor core outer circumferential portion, and then a function of holding the main magnets and the auxiliary magnets at predetermined positions.

Here, the magnetic path blocking portions may comprise a first magnetic path blocking portion provided between the bridge portions that form pairs between the adjacent main magnet holding portions, and may comprise a second magnetic path blocking portion provided between the main magnets and the bridge portions, from the point of connection of the bridge portions with the rotor core outer circumferential portion up to the circumferential holding portion.

By employing such a configuration, it is possible to effectively restrict magnetic paths between the adjacent main magnet holding portions radially inward from the auxiliary magnet holding portions, and it is possible to increase output and achieve better output efficiency of a motor by suppressing the generation of wasted magnetic flux that does not contribute to a rotational force.

Moreover, a plurality of cavities extending parallel to the shaft hole may be formed in the circumferential direction in the rotor core inner circumferential portion of the rotor core, and linking portions formed between adjacent cavities may be disposed on the radial inner side in substantially the circumferential center of the main magnet holding portions.

The linking portions which are formed between the adjacent cavities are thus arranged on the radial inner side in substantially the circumferential center of the main magnet holding portions, thereby making it easy to maintain the strength of the rotor.

The rotor described above is of use for forming an IPM motor (interior permanent magnet motor) in which said rotor is disposed on an inner side of a cylindrical stator having a stator core having a plurality of teeth, and windings wound around each of the plurality of teeth.

### [Advantages of the Invention]

As described above, according to the present invention, when a plurality of main magnet holding portions arranged alongside each other in a circumferential direction of a rotor core having a shaft hole in the center, and a plurality of auxiliary magnet holding portions disposed so as to face a space between each of the plurality of main magnet holding portions are provided in a magnet arrangement region provided close to an outer circumferential surface of the rotor core, and when the rotor core comprises a rotor core inner circumferential portion radially inward from the main magnet holding portions and a rotor core outer circumferential portion radially outward from the main magnet holding portions, magnetic path blocking portions for obstructing the formation of magnetic paths, and bridge portions provided adjacent to the magnetic path blocking portions, forming pairs between the adjacent main magnet holding portions and connecting the rotor core inner circumferential portion and the rotor core outer circumferential portion are provided between the adjacent main magnet holding portions radially inward from the auxiliary magnet holding portions. Consequently, it is possible to solve the problems in producing the magnet holding portions, and, furthermore, to suppress the formation of magnetic paths at parts between the adjacent main magnet holding portions radially inward from the auxiliary magnet holding portions, and it is possible to increase output and achieve better output efficiency of a motor by suppressing the generation of wasted magnetic flux that does not contribute to a rotational force.

Furthermore, a circumferential holding portion for holding the main magnets alongside each other in the circumferential direction is provided on the bridge portions, close to a point of connection to the rotor core inner circumferential portion, and a radial holding portion for holding the auxiliary magnets in the radial direction is furthermore provided on the bridge portions, close to a point of connection to the rotor core outer circumferential portion. Consequently, it is possible to arrange the magnets at fixed positions and to ensure predetermined performance of the motor.

In addition, a plurality of cavities extending parallel to the shaft hole are formed in the circumferential direction in the rotor core inner circumferential portion of the rotor core, and linking portions formed between adjacent cavities are disposed on the radial inner side in substantially the circumferential center of the main magnet holding portions. Consequently, it is possible to maintain good deformation balance of the rotor core (rotor strength) while achieving a reduction in weight of the rotor.

### [Brief Description of the Drawings]

[Fig. 1] Fig. 1 shows an IPM motor according to the present invention, where (a) is a side view in cross section thereof and (b) is a view along the cross section A-A in (a).
[Fig. 2] Fig. 2 is an oblique view showing a rotor used in the IPM motor of fig. 1.
[Fig. 3] Fig. 3 is an oblique view showing a rotor core.
[Fig. 4] Fig. 4 is a view of fig. 3 seen from an axial direction.
[Fig. 5] Fig. 5 is a partial enlargement of fig. 4.
[Fig. 6] Fig. 6 is a partial further enlargement of fig. 5.
[Fig. 7] Fig. 7 illustrates a magnetic flux distribution in a rotor according to the present invention.
[Fig. 8] Fig. 8 is a partial view of a conventional rotor seen from an axial direction.

### [Embodiment of the Invention]

An embodiment of an IPM motor (Interior Permanent Magnet Motor) according to the present invention will be described below with reference to the appended drawings.

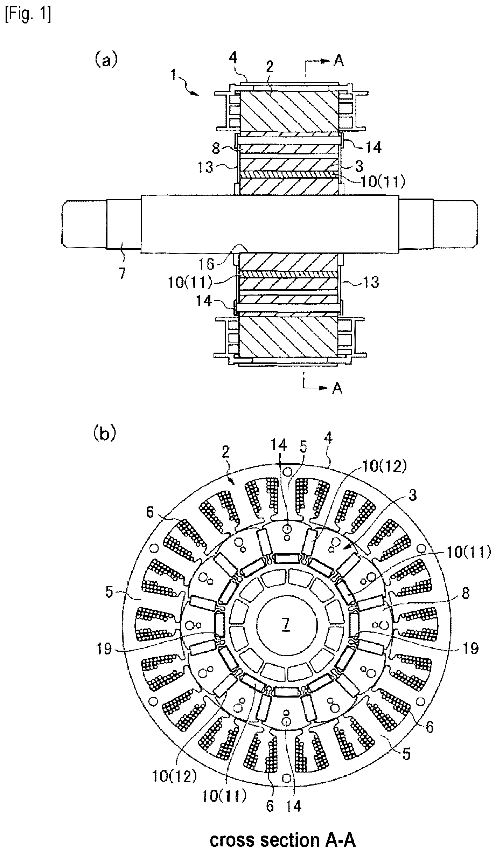

In fig. 1, an IPM motor 1 comprises a stator 2 and a rotor 3.

The stator 2 comprises: a stator core 4 formed in a substantially cylindrical shape; a plurality of (18 in this embodiment) teeth 5 formed radiating on an inner side of the stator core 4; and windings 6 wound onto the teeth 5 and connected to a power source device which is not depicted. The windings 6 cause the generation of a rotating magnetic field for rotating the rotor 3 when a current is supplied from the power source device.

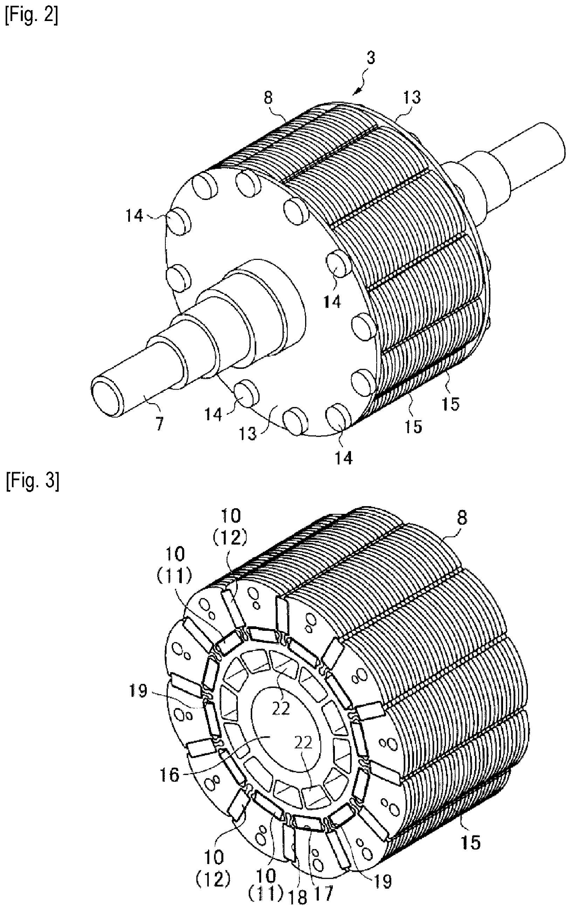

The rotor 3 is rotatably supported on the inner side of the stator 2. As also shown in fig. 2-4, the rotor 3 comprises: a rotor core 8 fitted to a single rotary shaft 7; a plurality of permanent magnets 10 arranged in a circumferential direction within the rotor core; and end plates 13 attached to both ends of the rotor core 8, the rotor core 8 and the end plates 13 being fastened in an axial direction by means of rivets 14 and thereby formed into a single piece.

The rotor core 8 is constructed in a cylindrical shape by stacking a plurality of disc-shaped steel plates 15 formed by silicon steel, for example. A shaft hole 16 for insertion-attachment of the rotary shaft 7 is formed in the center of the rotor core 8, and main magnet holding portions 17 and auxiliary magnet holding portions 18 in which the plurality of permanent magnets 10 are disposed are provided in a region close to an outer circumferential surface.

The plurality of main magnet holding portions 17 are arranged at predetermined intervals in the circumferential direction and also extend in the axial direction of the rotary shaft (shaft hole), and the plurality of auxiliary magnet holding portions 18 are disposed so as to face spaces between adjacent main magnet holding portions, are arranged further outward in the radial direction of the rotor core 8 than the main magnet holding portions 17, and are formed radiating about the shaft hole 16 while also extending in the axial direction of the rotary shaft (shaft hole).

The main magnet holding portions 17 extend parallel to the shaft hole 16 and are arranged so that a long side in a rectangular cross section thereof aligns with the circumferential direction of the rotor core 8. In this example, 12 main magnet holding portions 17 are provided at equal intervals in the circumferential direction.

Furthermore, the auxiliary magnet holding portions 18 extend parallel to the shaft hole 16 and are arranged so that a long side in a rectangular cross section thereof aligns with the radial direction of the rotor core 8, the auxiliary magnet holding portions 18 being provided from positions radially outward from an imaginary line joining each of the adjacent main magnet holding portions 17 as far as the vicinity of the outer circumferential surface of the rotor core 8. In this example, 12 auxiliary magnet holding portions 18 are provided at equal intervals in the circumferential direction.

Main magnets 11 are then fitted into each of the main magnet holding portions 17, the main magnets 11 being formed with a cuboid shape substantially the same as the shape of the main magnet holding portions 17, and auxiliary magnets 12 are furthermore fitted into each of the auxiliary magnet holding portions 18, the auxiliary magnets 12 being formed with a cuboid shape substantially the same as the shape of the auxiliary magnet holding portions 18.

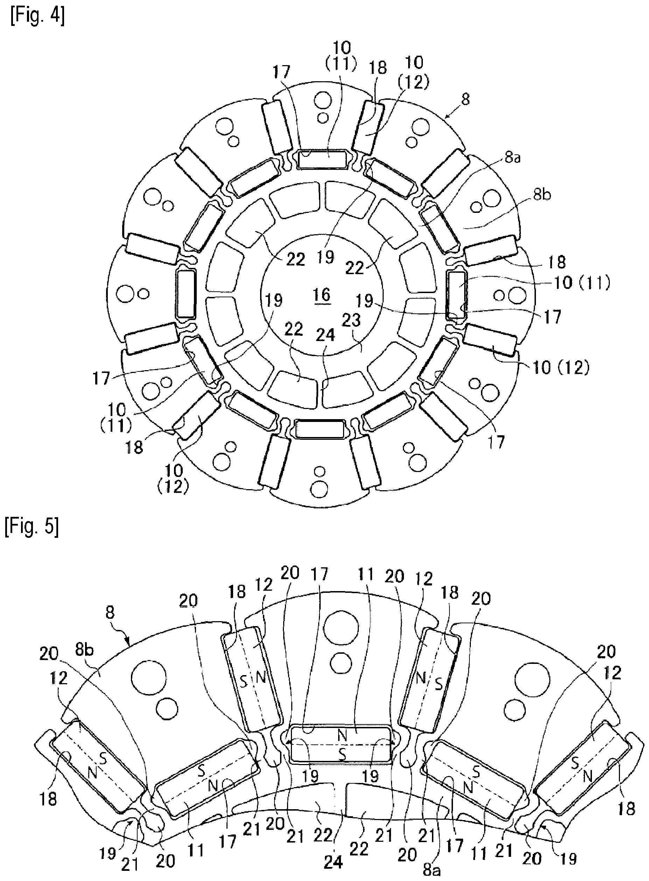

As shown in fig. 5, the main magnets 11 are fitted so that a magnetic pole direction thereof aligns with the radial direction of the rotor core 8 and so that magnetic poles thereof on a surface side of the rotor core 8 vary alternately (reverse) in the circumferential direction. Furthermore, the auxiliary magnets 12 are fitted so that a magnetic pole direction thereof aligns with the circumferential direction and so that magnetic poles on the side facing adjacent main magnets 11 are the same poles as the magnetic poles of said adjacent main magnets on the surface side of the rotor core 8.

Accordingly, the main magnets 11 and the auxiliary magnets 12 are arranged by applying a Halbach array in a rotation direction of the rotor 3, so that the magnetic flux is mainly generated on the surface side of the rotor core 8.

As also shown in fig. 4-6, the rotor core 8 is configured so that a rotor core inner circumferential portion 8a radially inward from the main magnet holding portions 17 and a rotor core outer circumferential portion 8b radially outward from the main magnet holding portions 17 are joined only at connecting portions 19 which constitute regions between adjacent main magnet holding portions.

In this configuration, the connecting portions 19 are formed in regions between adjacent main magnet holding portion 17 radially inward from the auxiliary magnet holding portions 18 (regions bounded by adjacent main magnet holding portions 17 and the auxiliary magnet holding portions 18).

The auxiliary magnet holding portions 18 are arranged so as to face the spaces between adjacent main magnet holding portions 17, and flows of magnetic flux between the main magnets 11 and the auxiliary magnets 12, and magnetic flux loops in the main magnets themselves and in the auxiliary magnets themselves are therefore readily formed at the connecting portions 19, which is problematic in that unnecessary magnetic flux that does not contribute to rotational force is readily generated.

In a normal situation it would be desirable to form the whole of the connecting portions 19 as magnetic path blocking portions in order to eliminate the formation of unnecessary magnetic paths in the connecting portions 19. With such a configuration, however, it would no longer be possible to link the rotor core inner circumferential portion 8a and the rotor core outer circumferential portion 8b so the rotor core 8 could no longer be formed as a single piece, and this would be a problem because of a greater number of components and a more complex assembly.

It is thus desirable to reduce the formation of flows of unnecessary magnetic flux at the connecting portions 19 and the generation of magnetic flux loops, and also to form the rotor core inner circumferential portion 8a and the rotor core outer circumferential portion 8b so as to be joined as a single piece. To that end, magnetic path blocking portions 20 are provided at the connecting portions 19, and pairs of bridge portions 21 connecting the rotor core inner circumferential portion 8a and the rotor core outer circumferential portion 8b are provided adjacent to the magnetic path blocking portions 20.

In other words, the parts between adjacent main magnet holding portions 17 radially inward from the auxiliary magnet holding portions 18 serve as the magnetic path blocking portions 20, excluding the pairs of bridge portions 21 connecting the rotor core inner circumferential portion 8a and the rotor core outer circumferential portion 8b.

It would also be feasible for non-magnetic bodies to be embedded in parts between adjacent main magnet holding portions 17 radially inward from the auxiliary magnet holding portions 18, but the magnetic path blocking portions 20 are formed by gaps in this example, in order to simplify production and achieve a reduction in weight.

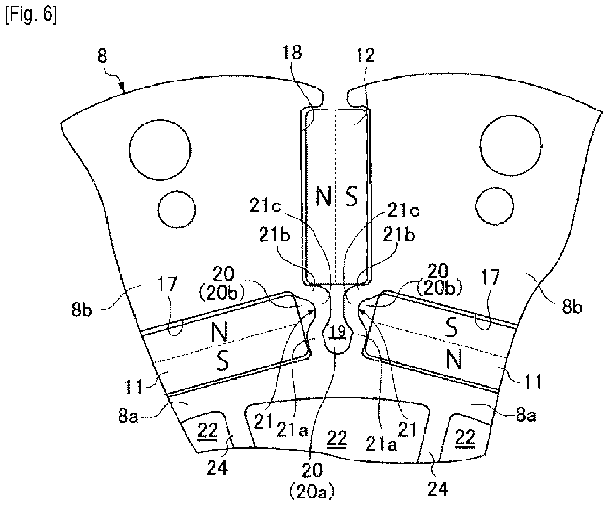

As also shown in fig. 6, the bridge portions 21 are constructed by means of elongate linking pieces having a substantially uniform width, extending parallel to the shaft hole 16 and having one end on the radial inner side connected to the rotor core inner circumferential portion 8a and another end on the radial outer side connected to the rotor core outer circumferential portion 8b.

In this example, pairs of bridge portions 21 are provided between adjacent main magnet holding portions 17. The pairs of bridge portions 21 are formed with mirror symmetry in relation to an imaginary plane passing through the center axis of the rotor core 8 and the center between adjacent main magnet holding portions 17.

A circumferential holding portion 21a for holding the main magnets 11 in the circumferential direction is provided on each of the bridge portions 21, close to a point of connection to the rotor core inner circumferential portion 8a, and a radial holding portion 21b for holding the auxiliary magnets 12 in the radial direction is furthermore provided on each of the bridge portions 21, close to a point of connection to the rotor core outer circumferential portion 8b.

The circumferential holding portions 21a extend radially outward from the rotor core inner circumferential portion 8a, and are formed facing the radially inside part of circumferential end faces of the main magnets 11 so as to restrict circumferential movement of the main magnets 11.

Furthermore, the radial holding portions 21b extend in the circumferential direction from the rotor core outer circumferential portion 8b, and are formed facing the radially inside end faces of the auxiliary magnets 12 so as to restrict radial movement of the auxiliary magnets 12.

The part of the circumferential holding portions 21a furthest from the rotor core inner circumferential portion 8a and the part of the radial holding portions 21b furthest from the rotor core outer circumferential portion 8b are then linked by means of a curved joining portion 21c.

Accordingly, the bridge portions 21 connect the rotor core outer circumferential portion 8b from the rotor core inner circumferential portion 8a, and are formed substantially in the shape of a letter "S" with a small width.

That is to say, the magnetic path blocking portions 20 which are provided on the parts between adjacent main magnet holding portions 17 radially inward from the auxiliary magnet holding portions 18 are divided, by the bridge portions 21, into: a first magnetic path blocking portion 20a provided between pairs of bridge portions 21; and second magnetic path blocking portions 20b provided between the main magnets 11 and the bridge portions 21, from the point of connection of each of the bridge portions 21 with the rotor core outer circumferential portion 8b up to the circumferential holding portion 21a.

Accordingly, the first magnetic path blocking portion 20a is configured by means of a radially-extending gap formed over a length roughly equal to a radial width of the main magnet holding portions 17 between the pair of substantially "S"-shaped bridge portions 21 which are formed with mirror symmetry.

Furthermore, the second magnetic path blocking portions 20b are configured by means of gaps having a substantially semicircular cross section which are formed between the bridge portions 21 and the radial outer side of the circumferential end faces of the main magnets 11.

Furthermore, a plurality of cavities 22 extending parallel to the shaft hole 16 are provided between the shaft hole 16 and the main magnet holding portions 17 of the rotor core 8, i.e., in the rotor core inner circumferential portion 8a.

Each of the cavities 22 is arranged on the radial inner side of the respective auxiliary magnet holding portions 18, i.e., on the radial inner side of the magnetic path blocking portions 20.

Accordingly, linking portions (spokes) 24 extending radially outward from a hub portion 23 formed around the shaft hole 16 are formed between adjacent cavities 22, the linking portions (spokes) 24 being formed radially inside each of the main magnet holding portions 17 so as to face substantially the circumferential center of the main magnet holding portions.

The main magnets 11 and the auxiliary magnets 12 are arranged by applying a Halbach array in the configuration above, so the majority of the magnetic flux is generated on the surface side of the rotor 3. If the cavities 22 were not provided, then magnetic paths would also be formed on the inner side of the main magnets 11 and the auxiliary magnets 12 of the rotor core 8, and a considerable amount of magnetic flux passing through this inner side would therefore also be generated.

However, the cavities 22 are formed on the radial inner side of the auxiliary magnet holding portions 18, and magnetic paths that would be formed radially inward from the main magnets 11 and the auxiliary magnets 12 are therefore blocked, making it possible to effectively reduce the magnetic flux leaking radially inward from the main magnets 11 and the auxiliary magnets 12.

Incidentally, flows of magnetic flux are still generated between the main magnets and the auxiliary magnets even if a Halbach array such as this is adopted, and there is furthermore the problem of magnetic flux that does not contribute to rotational force being generated, such as magnetic flux loops being formed by the main magnets themselves and by the auxiliary magnets themselves.

In response to this problem, according to the configuration described above, the connecting portions 19 between adjacent main magnet holding portions 17 radially inward from the auxiliary magnet holding portions 18 link the rotor core inner circumferential portion 8a and the rotor core outer circumferential portion 8b only by means of the bridge portions 21 afforded by the substantially "S"-shaped narrow linking pieces having a long path, which therefore restricts the formation of magnetic paths.

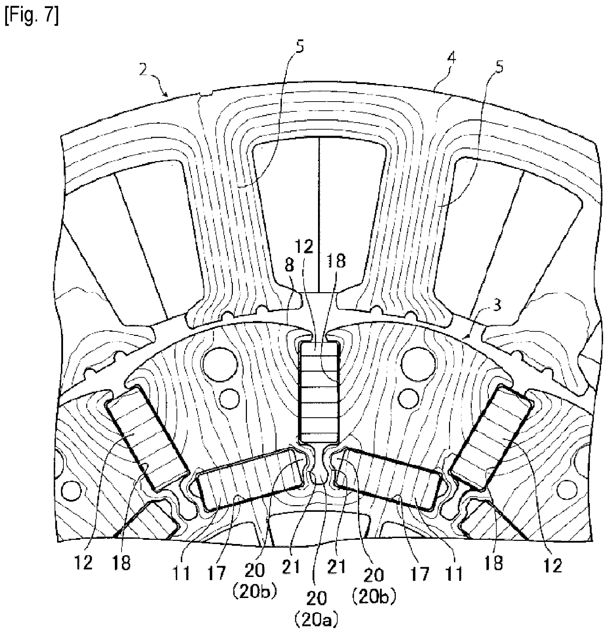

As shown in fig. 7, although magnetic flux and magnetic flux loops that do not contribute to rotational force can also be seen at the bridge portions 21, the formation of flows of magnetic flux and magnetic flux loops that do not contribute to rotational force is obstructed outside the bridge portions by means of the magnetic path blocking portions 20 (first magnetic path blocking portions 20a and second magnetic path blocking portions 20b).

Consequently, the bridge portions 21 and the magnetic path blocking portions 20 are capable of considerably suppressing the generation of wasted magnetic flux that does not contribute to rotational force, and it is therefore possible to increase the output and achieve better efficiency of a motor.

Furthermore, the rotor core inner circumferential portion 8a and the rotor core outer circumferential portion 8b are linked as a single piece by means of the bridge portions, so the rotor core can be formed as a single piece.

Additionally, in the configuration described above, the main magnet holding portions 17 and the auxiliary magnet holding portions 18 are not provided adjacently in the circumferential direction, rather the auxiliary magnet holding portions 18 are formed so as to face the spaces between adjacent main magnet holding portions 17, so there is no longer the problem of narrow circumferential gaps between the magnet holding portions which makes production more difficult.

Furthermore, the plurality of cavities 22 extending parallel to the shaft hole are formed in the circumferential direction in the rotor core inner circumferential portion where magnetic flux that does not contribute to rotational force may be generated, so it is possible to achieve a reduction in the weight of the rotor.

Furthermore, the radially-extending linking portions (spokes) 24 formed between adjacent cavities 22 are arranged radially inside the main magnet holding portions substantially in the circumferential center thereof, therefore making it possible possible to maintain good deformation balance of the rotor core 8.

The shapes of the magnetic path blocking portions 20, bridge portions 21, and linking portions (spokes) 24 are thus not limited to the shapes described above, and these shapes may be appropriately varied within a scope that does not impair the functions of the present invention (magnet holding function, magnetic path restricting function, rotor core consolidation function, and deformation balance maintaining function).

### [Key to Symbols]

- 1: IPM motor
- 3: Rotor
- 7: Rotary shaft
- 8: Rotor core
- 10: Permanent magnet
- 11: Main magnet
- 12: Auxiliary magnet
- 16: Shaft hole
- 17: Main magnet holding portion
- 18: Auxiliary magnet holding portion
- 19: Connecting portion
- 20: Magnetic path blocking portion
- 20a: First magnetic path blocking portion
- 20b: Second magnetic path blocking portion
- 21: Bridge portion
- 21a: Circumferential holding portion
- 21b: Radial holding portion
- 22: Cavity
- 24: Linking portion

## Claims

1. A rotor (3) used in a motor having an inner-rotor structure, the rotor (3) comprising a cylindrical rotor core (8) and a plurality of permanent magnets (10) arranged inside the rotor core (8), and being **characterized in that**:
a shaft hole (16) is formed in the center of the rotor core (8) so as to penetrate the rotor core (8);
a plurality of main magnet holding portions (17) extending parallel to the shaft hole (16) and arranged so that a long side in a rectangular cross section thereof aligns with a circumferential direction of the rotor core (8), and
a plurality of auxiliary magnet holding portions (18) extending parallel to the shaft hole (16) and disposed so as to face a space between each of the adjacent main magnet holding portions (17), the auxiliary magnet holding portions (18) being arranged further outward in a radial direction of the rotor core (8) than the main magnet holding portions (17), and being arranged so that a long side in a rectangular cross section thereof aligns with the radial direction of the rotor core (8)
are formed in a region close to an outer circumferential surface of the rotor core (8);
the rotor core (8) comprises:
a rotor core inner circumferential portion (8a) radially inward from the main magnet holding portions (17), and
a rotor core outer circumferential portion (8b) radially outward from the main magnet holding portions (17); and
magnetic path blocking portions (20) for obstructing the formation of a magnetic path, and
bridge portions (21) provided adjacent to the magnetic path blocking portions (20), forming pairs between the adjacent main magnet holding portions (17), and connecting the rotor core inner circumferential portion (8a) and the rotor core outer circumferential portion (8b)
are provided between the adjacent main magnet holding portions (17) radially inward from the auxiliary magnet holding portions (18).

2. The rotor (3) as claimed in claim 1, **characterized in that** the permanent magnets (10) include:
main magnets (11) fitted into the main magnet holding portions (17) so that a magnetic pole direction thereof aligns with the radial direction of the rotor core (8), and auxiliary magnets (12) fitted into the auxiliary magnet holding portions (18) so that a magnetic pole direction thereof aligns with the circumferential direction of the rotor core (8), and
a circumferential holding portion (21a) for holding the main magnets (11) in the circumferential direction is provided on the bridge portions (21), close to a point of connection to the rotor core inner circumferential portion (8a), while a radial holding portion (21b) for holding the auxiliary magnets (12) in the radial direction is also provided on the bridge portions (21), close to a point of connection to the rotor core outer circumferential portion (8b).

3. The rotor (3) as claimed in claim 2, **characterized in that** the magnetic path blocking portions (20) have a first magnetic path blocking portion (20a) provided between pairs of bridge portions (21).

4. The rotor (3) as claimed in claim 2 or 3, **characterized in that** the magnetic path blocking portions (20) have a second magnetic path blocking portion (20b) provided between the main magnets (11) and the bridge portions (21), from the point of connection of the bridge portions (21) with the rotor core outer circumferential portion (8b) up to the circumferential holding portion (21a).

5. The rotor (3) as claimed in any of claims 1 to 4, **characterized in that** a plurality of cavities (22) extending parallel to the shaft hole (16) are formed in the circumferential direction in the rotor core inner circumferential portion (8a) of the rotor core (8), and linking portions (24) formed between the adjacent cavities (22) are disposed on the radial inner side in substantially the circumferential center of the main magnet holding portions (17).

6. An IPM motor (1) comprising: a cylindrical stator (2) having a stator core (4) having a plurality of teeth (5), and windings (6) wound around each of the plurality of teeth (5); and the rotor (3) as claimed in any of claims 1 to 5, provided on an inner side of the stator (2).
